## Europäisches Patentamt
## European Patent Office
## Office européen des brevets

(19)

(11) Publication number: **0 220 450**
B1

(12)

# EUROPEAN PATENT SPECIFICATION

(45) Date of publication of the patent specification:
22.03.89

(21) Application number: 86112617.5

(22) Date of filing: 12.09.86

(51) Int. Cl.⁴: **B05B 7/16, B29B 7/48,** B29C 67/20, B01F 3/04, B01F 7/10, B05D 1/02, C09J 5/08, C08J 9/30

(54) Method and apparatus for foaming high viscosity polymer materials.

(30) Priority: 02.10.85 US 783162

(43) Date of publication of application:
06.05.87 Bulletin 87/19

(45) Publication of the grant of the patent:
22.03.89 Bulletin 89/12

(84) Designated Contracting States:
BE CH DE FR GB IT LI NL SE

(56) References cited:
CH-A- 408 400
DE-B- 2 120 359
US-A- 2 987 774
US-A- 4 405 063
US-A- 4 405 491
US-A- 4 423 161

(73) Proprietor: NORDSON CORPORATION, 555 Jackson Street P. O. Box 151, Amherst Ohio 44001(US)

(72) Inventor: Cobbs, Walter H., Jr., 387 Cherry Valley Drive, Amherst Ohio 44001(US)
Inventor: Huddleston, Robert J., 28115 West Oakland, Bay Village Ohio(US)

(74) Representative: Eisenführ & Speiser, Martinistrasse 24, D-2800 Bremen 1(DE)

ACTORUM AG

## Description

The assignee of this invention pioneered the development and application of methods and apparatus for foaming hot melt thermoplastic adhesives or so-called "hot melts" widely used throughout the industry for adhering many diverse products, as well as polymeric coatings and paints.

With respect to hot melt adhesives, for example, the assignee of this invention discovered that the adhesive strength of a bond achieved with a given quantity of a selected hot melt adhesive could be appreciably improved and in most instances at least doubled if the adhesive were applied as a foam rather than as a conventional non-foamed adhesive. A hot melt thermoplastic adhesive foam system is disclosed in U.S. Patent No. 4 059 466 of Scholl et al wherein a solid mixture of hot melt thermoplastic adhesive and blowing agent is heated and melted in a heated reservoir at a temperature above the melting temperature of the adhesive but below the decomposition temperature of the blowing agent. The molten adhesive and solid blowing agent mixture is then pressurized by a gear pump and supplied under pressure as, for example, 300 pounds per square inch, to a hot melt dispenser. Between the pump and the outlet of the hot melt dispenser, the molten adhesive and solid blowing agent mixture is further heated to a higher temperature at which the blowing agent decomposes and evolves a gas as, for example, nitrogen, which, at that pressure goes into solution with the liquid adhesive. The pressurized liquid/gas adhesive solution is then supplied to a valved type outlet at the adhesive dispenser from which the adhesive is dispensed at atmospheric pressure. Upon emerging from the outlet nozzle of the dispenser, the gas evolves from the solution in the form of small bubbles causing the adhesive to expand volumetrically. The resultant adhesive in an uncompressed state sets up as a homogeneous solid foam having gas cells substantially evenly distributed throughout the adhesive.

In U.S. Patent No. 4 059 714 of Scholl et al, there is disclosed another hot melt thermoplastic adhesive foam system wherein the molten adhesive is mixed with a gas and pressurized by either a one-step or two-step geared pump. Within the geared pump, the gas and molten adhesive are thoroughly mixed and the gas is forced under pump outlet pressure into solution with the liquid adhesive. The pressurized liquid/gas adhesive solution is then supplied to a valved type dispensing gun from which the adhesive is dispensed at atmospheric pressure. Again, upon emerging from the outlet nozzle of the dispenser, the gas evolves from the solution in the form of small bubbles causing the adhesive to expand volumetrically and forming in an noncompressed state, a homogeneous solid foam having gas cells evenly distributed throughout the adhesive. Applicant's assignee further disclosed in U.S. Patent No. 4 156 754 of Cobbs, Jr. et al the incorporation of soluble or solid phase surfactant materials to stabilize the dispersions of gas in the molten thermoplastic material for significant periods of time to allow for subsequent pressurization by simple mechanical means including pumps for pressurized dissolution, flow transfer, dispensing and foaming with ease and simplicity.

In the development of a related technology, applicant's assignee disclosed in U.S. Patent No. 4 247 581 of Cobbs, Jr. et al surface coating methods and apparatus employing polymeric materials to be coated on a surface by first foaming liquid compositions containing film-forming solids, then conveying the foam toward the surface and, upon foam disintegration, forming a film of solids on the surface. That invention enabled the use of polymeric film-forming compositions having viscosities in excess of 300 centipoises, in the range of 300 to 30,000 centipoises or higher.

In U.S. Patent Nos. 4 301 119 and 4 423 161, both of Cobbs, Jr. et al, there are disclosed methods and apparatus for dispensing of foam of substantially constant foam-volume ratio. According to those inventions, a vessel is provided for containing a foamable mixture of liquid and blowing agent under pressure. The vessel has a vapor space above the liquid and a dispensing outlet and means are provided for maintaining a substantially constant composition of blowing agent in the vapor state, under a vapor pressure at least equal to the vapor pressure of the foamable mixture, for dispensing of foam of constant foam-volume ratio. Those patents disclose foaming a variety of liquid compositions including coating and adhesive compositions which comprise liquid film-forming or polymeric components, including both thermoplastic and thermosetting resinous compositions.

In U.S. Patent No. 4 405 063 of Wydro et al, a system is disclosed for controlling the density of dispensed hot melt thermoplastic adhesive foams to assure uniform foam characteristics. This patent includes the use of a two-stage geared pump to mix molten adhesive with gas from a gas supply connected to the pump when adhesive foam is being dispensed.

U.S. Patent Nos. 4 505 406 and 4 505 957, both to Cobbs, Jr. et al, disclose a circulating loop enabling hot foamable compositions to be processed continuously without degradation, curing or loss of volatile constituents and uniformly applied as a coating.

U.S.-Patent 2 987 774, to which the pre-characterizing portions of independent claims 1 and 6 refer, discloses a method and apparatus for mixing gas with a fluid polymer material by means of a screw pump. The screw projections from two parallel shafts accordingly each form a screw helix. Such a device is not suitable for processing the high viscosity polymer materials used as hot melt thermoplastic adhesives, due to the extreme amount of shearing and heat input to the material being processed. Such a heat input causes premature cross linking or other kinds of degradation of the materials used in the context of the present invention.

DE-B 2 120 359 discloses a mixer with a housing surrounding it to permit supply or removal of heat. In this prior art device, there is no possibility of adding a gas to the mixture, to force it into solution with the polymer material.

As set forth in some of the patents recited above, one of the methods for mixing the gaseous foaming agent with the molten adhesive and pressurizing the gas into solution in the adhesive is the use of a one or two-step geared pump. In this application, a molten adhesive and foaming gas flow into the interior of the gear pump where the meshing teeth of a pair of gears causes the gas and molten adhesive to be thoroughly mixed and the gas to be forced under pressure into solution to form a molten adhesive/gas solution. The gear pump is operable to increase the pressure of the gas and molten adhesive mixture to a pressure of approximately $2.07 \cdot 10^6$ N/m² (300 pounds per square inch) at which pressure the gas contained within the molten polymer is maintained in solution with the molten polymer, a condition in which it remains until dispensed at atmospheric pressure to form the foam. The intermeshing gear teeth of the pump operate as multiple small pistons to pull incoming liquid into the pump, pressurize it, and dispense it from the pump outlet. Hot melt adhesive compositions which have been foamed employing a gear pump as disclosed, for example, in U.S. Patent No. 4 059 714 include conventional polyethylene-based hot melt adhesive compositions, such as Eastabond A-3 through A-32 manufactured by Eastman Chemical Company. These materials range in viscosity from about 2200 mPa·s to 35,000 to 40,000 mPa·s at melt temperatures of about 180°C (350°F). Although these materials can be successfully foamed using a one or two stage geared pump, as the viscosity increases, the throughput of material dramatically decreases. That is, at the higher viscosity levels on the order of 30,000 mPa·s, throughput drops to about one-third to one-quarter of the throughput using lower viscosity materials.

Moreover, it has been found that when it is attempted to foam relatively high viscosity polymeric materials such as thermoset sealant materials having viscosities in the range of 300,000 to above 1,000,000 mPa·s using a gear pump system that the resultant process has both unacceptably low throughput rates and high rise in temperature of the polymer material. Some temperature rise is tolerable with some thermoplastic resins, for example, when foaming thermoplastics such as polyisobutylene-based materials and polyethylene-based hot melts but for thermosetting materials such as silicone RTV (room temperature vulcanizing) rubbers such temperature rise results in premature curing of the material giving it very short "open time" or even causing its setting up in the foaming equipment causing equipment stoppage. Likewise, such temperature rise can cause degradation of the polymer depending on its chemical structure. Investigation of the cause of the unacceptable throughput rates and temperature rise when attempting to foam high viscosity polymer materials using a geared pump has revealed that the action or mechanical work of the pump on the polymer material is converted to heat which raises the temperature of the polymer material.

As stated, a temperature rise as observed makes foaming of such relatively high viscosity material using a conventional geared pump to be commercially impracticable.

This invention in one of its main aspects is predicated upon the discovery that solutions of gas in a polymeric material having high viscosities on the order of 30,000 to above 1,000,000 mPa·s can be achieved with commercially acceptable throughput rates and with minimal and acceptable temperature rise of the polymer material by mixing the foam producing gas with the polymer material by means of a set of intermeshing, counter-rotating series of discs. It has been found that by mixing the gas and polymer in such a disc mixer that a solution of gas bubbles in the polymeric material under pressure can be achieved such that when the solution is dispensed, with release of pressure, there is produced continuous and immediate foaming of the polymer material with the gas being released from solution and becoming entrapped in the polymer to form a homogeneous foam.

The disc mixing apparatus employed in the present invention includes a tubular housing, a pair of substantially parallel, oppositely driven shafts extending along the length of the housing, a series of spaced, solid, flat discs fixedly mounted on each shaft substantially perpendicularly to the axis thereof with the discs of one shaft intermeshing with the discs on the other shaft, and a stator within the housing extending along the length of the housing and having a surface contour corresponding closely to the contour of a portion of the intermeshing discs. The intermeshing discs serve to divide the housing into a series of compartments along its length. The polymer to be foamed is introduced in liquid form at one end of the housing. A polymer/gas solution outlet extends from the other end of the housing. The foaming gas is introduced into the polymer either upstream of the disc mixer as gas bubbles or in the mixer itself where it fills a head space above the polymer. The parallel shafts are driven in opposite directions causing the intermeshing discs to rotate with respect to one another. Rotation of the discs causes laminar flow of the polymer material with respect to the faces of the discs and stretches the added gas bubbles generating the necessary surface area for dissolution of the gas in the polymer to occur. When the gas is added to the head space above the polymer in the mixer, rotation of the discs causes relative motion of the polymer material between shafts, the polymer material entraining the gas in the head space and forcing the gas into solution in the polymer. The mixer breaks up large bubbles of gas in the polymer and entrains very small bubbles at the nip formed between the discs and the wall of the housing. Rotation of the discs also causes the gas/polymer solution to be conveyed along the length of the housing through the series of individual compartments.

The result of the mixing operation is that a polymeric material such as a polymeric material suitable for use as a coating, adhesive, sealant, gasketing material and many other areas is produced having a dispersion and solution of gas bubbles therein. The polymer/gas solution is then transferred out the polymer/gas outlet under pressure to a dispensing device such as a valved nozzle from which the material is dispensed at atmospheric pressure.

Throughout this specification and claims the term "solution" is used to describe the liquid polymer/gas dispersion supplied under high pressure to the dispensing device, which dispersion when dispensed at atmospheric pressure cools and creates a foamed polymer structure. The applicants are of the view that this mixture is a true solution in which the molecules of the dissolved gas are dispersed among those of the liquid polymer. The term though as used in the specification and the claims of the application is intended to define and encompass the broader generic definition of solution which is a gas homogeneously mixed with the molten or liquid polymer, whether or not the molecules of the dissolved gas are in fact dispersed among those of the solvent.

Upon emerging from the outlet nozzle of the dispenser, the gas evolves from the solution in the form of small bubbles, which enlarge causing the polymer material to expand volumetrically, and become entrapped within the material as it solidifies or cures. The resultant product in an uncompressed state sets up as a homogeneous solid foam having gas pores or cells, which may be of various forms including both open and closed cells, substantially evenly distributed throughout the polymer. As the polymer material cools or cures a permanent homogeneous foam is created.

As noted, this invention achieves continuous foaming of a variety of polymeric materials having a wide range of viscosities extending above 1,000,000 mPa·s. That is, a significant feature of this invention is its applicability to a wide range of classes of thermoplastic and thermosetting materials which may not be suitable for foaming otherwise because of their relatively high viscosity and sensitivity to temperature rise. The present invention is capable of mixing a foaming gas with relatively high viscosity polymer materials and placing that gas in solution at commercially practicable throughput rates with minimal and acceptable temperature rise of the material to provide a continuous output of foamed polymer material. Thus, by the method and apparatus of this invention, diverse thermoplastic and thermosetting materials may be reliably foamed with uniform quality output of low density foam material at commercially practicable throughput rates and in a continuous manner.

## Brief Description of the Drawings

Fig. 1 is a schematic of the system for performing the foaming method of this invention;

Fig. 2 is a cross-sectional view of the disc mixer used in the practice of the method of this invention taken along the line transverse to the longitudinal axes of the shafts on which the discs are mounted;

Fig. 3 is a cross-sectional view taken along line 3–3 of Fig. 2;

Fig. 4 is a cross-sectional view taken along line 4–4 of Fig. 2.

## Detailed Description of the Invention

As stated above, the present invention is useful for foaming both thermoplastic and thermosetting polymeric materials.

A "thermoplastic material", as that term is used and understood to those skilled in the art, includes any natural or synthetic thermoplastic polymer or polymeric compositions. A thermoplastic material is a normally solid or semi-solid material at use temperatures and it melts or liquifies upon heating to a higher temperature. Upon cooling the material solidifies or returns to a solid or semi-solid state. As also used in this description, the term "thermoplastic hot melt adhesive" or "hot melt adhesive" is a term which is well known in the art and this material has the same characteristics of liquification upon heating and, upon cooling, solidification to a solid, semi-solid or tacky state.

A "thermosetting material", as that term is used and understood to those skilled in the art, includes any natural or synthetic thermosetting polymer or polymeric compositions. Thermosetting resins are often liquids at some stage of their processing, which are cured by heat, catalyst or other chemical means. After being fully cured, thermosets are substantially infusible and insoluble and cannot be resoftened by heat.

Examples of thermoplastic materials include polymers of ethylenically unsaturated monomers, such as polyethylene, polypropylene, polybutylenes, polystyrenes, poly($\alpha$–methyl styrene), polyvinyl chloride, polyvinyl acetate, polymethyl methacrylate, polyethyl acrylate, polyacrylonitrile and the like; copolymers of ethylenically unsaturated monomers such as copolymers of ethylene and propylene, ethylene and styrene, and polyvinyl acetate, styrene and maleic anhydride; styrene and methyl methacrylate; styrene and ethyl acrylate; styrene and acrylonitrile; methyl methacrylate and ethyl acrylate and the like; and polymers and copolymers of conjugated dienes such as polybutadiene, polyisoprene, polychloroprene. Examples of thermosetting materials useful in this invention include synthetic butyl rubbers, synthetic isoprene rubbers, silicone RTV (room temperature vulcanizing) rubbers, styrenebutadiene rubber, ethylene-propylene-diene rubber, acrylonitrile-styrene butadiene rubber and the like; saturated and unsaturated polyesters including alkyds and other polyesters; nylons and other polyamides; polyesteramides and polyurethanes; chlorinated polyethers, epoxy polymers, cellulose esters such as cellulose acetate butyrate, and the like. These materials can have viscosities extending above 1,000,000 mPa·s.

The term "thermoplastic material" is sometimes used herein interchangeably with "hot melt", "melt", "hot melt thermoplastic" or "hot melt adhesive". It is, of course, to be appreciated that all these compositions are characterized by their thermoplastic nature as above defined. Two thermoplastic or hot melt adhesive compositions having markedly different viscosities are employed in the operating examples which follow. Both are conventional polyethylene-based adhesive compositions manufactured by Eastman Chemical Company. One is "Eastabond A-3" having a viscosity of 2200 mPa·s at 180°C (350°F). The other is "Eastabond A-32" having a viscosity of 35,000–40,000 mPa·s at 180°C (350°F).

Another one of the operative examples which follows shows the foaming of a polyisobutylene-based thermoplastic sealing and caulking material sold by Tremco Company under the name Tremco Butyl Sealant JS-792.

In addition to the variability in polymer formulations, different types of gases may be employed in the practice of this invention including air, nitrogen, oxygen, carbon dioxide, methane, ethane, butane, propane, helium, argon, neon, fluorocarbons such as dichlorodifluoroethane, monochlorotrifluoromethane, or other gases, or mixtures of any of these gases. Such gases can be varied again according to the types of polymers materials employed, conditions and availability of materials.

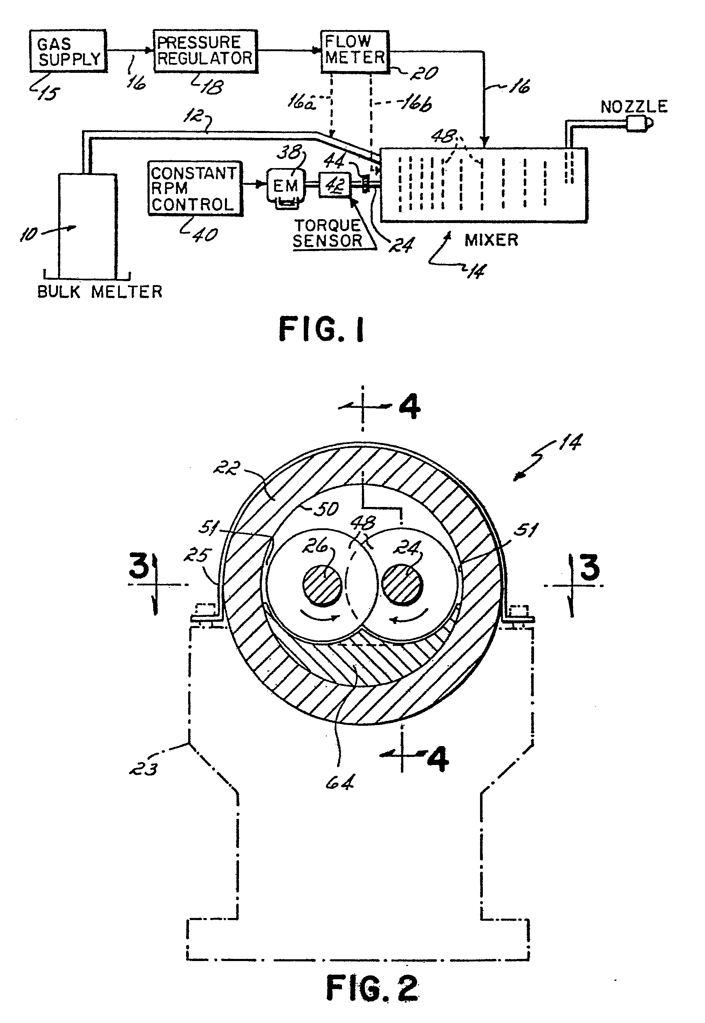

Referring now to Fig. 1 of the drawings, a schematic illustration of the system for performing the method of this invention is shown. The apparatus employs a bulk source of polymeric material such as a bulk melter 10 containing heating means for liquifying a solid or semi-solid polymer material and pumping it from the tank. An example of a bulk melter is shown in U.S. Patent No. 4 073 409 also assigned to the assignee of this invention and that description is incorporated herein by reference. The pump is a cartridge-type gear pump, however, any pump capable of providing sufficient pressure to pump the material from the bulk container is suitable. This could include a dual axis screw pump integrated with the disc mixer. Alternatively, hot melt could be provided from conventional, commercially available hot melt dispensers. When employing heat-sensitive or curable material, the source of polymer material is of course not heated.

The material to be foamed is conveyed through line 12, which may be a hose capable of conveying heated material under pressure, to the upstream end of a disc mixer 14 where it is injected into the mixer.

The foaming gas is supplied to the disc mixer from a pressurized gas supply 15 through a gas line 16. A pressure regulator 18 and flow meter 20 in line 16 permit control of gas pressure and flow rate to the mixer 14. As shown in Fig. 1, the gas may be supplied to the system through several alternative paths. One is to fill the mixer only partially full with polymer material and to fill the head space in the disc mixer over the polymer material with gas from line 16 (shown in solid) to a desired pressure whereupon in the mixer the polymeric material to be foamed entrains the gas from the head space on operation of the mixer to form the polymer/gas solution. An alternative gas flow path 16a (shown in dotted) is to meter gas bubbles into the line 12 supplying the polymeric material to the mixer 14 such that the gas and polymer enter the mixer together and completely fill it for placing the gas into solution in the polymer in the mixer. Another alternative 16b (also shown in dotted) is to have a porous end plate in the mixer and to supply gas bubbles through the porous end plate to the mixer 14, which is completely filled with polymer, and into the polymer. Any of these alternative methods may be used depending upon application; however, for purposes of illustration, supplying the foaming gas to the head space in the mixer 14 through line 16 is illustrated as one embodiment.

Referring now to Figs. 2–4, the construction of the disc mixer 14 is shown in detail. The mixer 14 comprises a tubular housing 22 which is supported on a base 23 (shown in dotted in Fig. 2) in a substantially horizontal position and may be secured thereto by means of straps 25. Extending along the long axis of the housing 22 are a pair of substantially parallel shafts 24, 26. Upstream and downstream end caps 28 and 30, respectively, are secured to the respective opposite ends of the housing 22 by suitable means such as bolts 32. The end caps 28 and 30 close the housing 22 ends and include suitable thrust bearings 34 and journals 36 for supporting the shafts in the end caps 28, 30 for rotation. Since some applications such as the foaming of hot melt adhesives takes place at elevated temperatures, e.g., 180°C (350°F), the bearings and journals must be able to withstand these elevated temperatures.

As shown in Fig.1, one of the shafts 24 is driven by an electric motor 38. A constant rpm controller 40 can be used to control motor speed. A torque sensor 42 is used to sense and to control the level of material in the mixer since under constant processing conditions the torque to drive the shafts is directly related to the amount of material being processed. The drive shaft 24 includes a gear 44 which meshes with a like gear 46 on the adjacent driven shaft 26 such that on rotation of driven shaft 24 in one direction the drive shaft 26 rotates in the opposite direction.

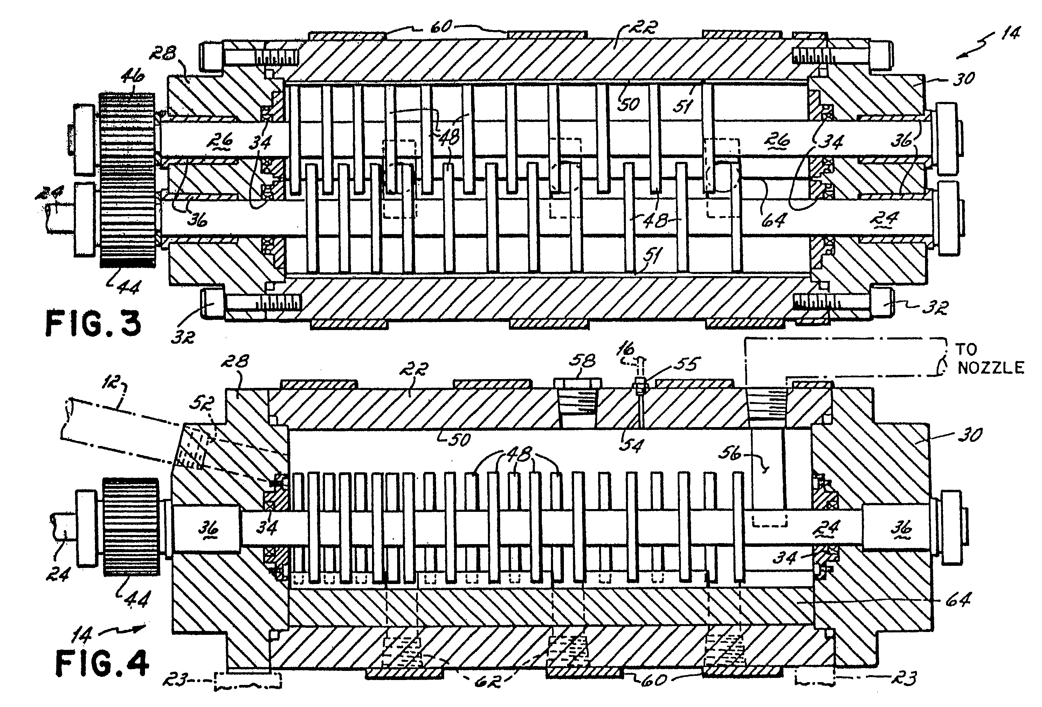

Each shaft 24, 26 has fixedly mounted thereon a series of spaced, solid, flat discs 48 which are substantially perpendicular to the axis of the shafts 24, 26. As best seen in Figs. 2 and 3, the discs 48 intermesh or overlap one with another in the space between the two shafts 24, 26. Moreover, the discs extend substantially to the inner circumference 50 of the housing 22 creating a nip 51 therebetween. Operation of the drive motor 38 causes rotation of the shafts 24, 26 in opposite directions (shown by arrows in Fig. 2) which causes the overlapping faces of the intermeshing discs 48 to move with respect to one another and the circumference of the discs 48 to move with respect to the fixed housing interior 50.

The polymer material enters the housing 22 through a port 52 in the upstream end cap 28 of the housing 22. Line 16 is connected to port 52 by a suitable fitting (not shown). The foaming gas delivered to the housing through line 16 enters through an opening 54 in the housing wall 22. Line 16 is connected to opening 54 by a suitable pressurized hose fitting 55. As stated, alternatively the opening 54 could be placed in the material line 12 or end cap 28 or the roaming gas could be injected through a porous end plate into the material in the housing. As best seen in Figs. 3 and 4, the upstream discs 48 (i.e., those disposed toward the end cap 28) are more closely spaced to one another than the downstream discs. This progressively increasing spacing of the intermeshing discs with respect to one another from upstream end to downstream end may provide some advantage in conveying material along the housing, particularly the more highly viscous materials. However, it is not believed that the disc spacing is critical, and this invention equally contemplates uniform spacing of the discs one with another.

A material outlet in the form of a dip tube 56 extends through the housing wall 22 at the downstream end of the housing to a level of at least the center line of the shafts 24, 26. The dip tube 56 permits the polymer material having gas mixed in solution therewith and being under pressure in the housing to exit up the dip tube 56 and be conveyed to a dispensing nozzle. That is, in the embodiment shown in the drawings, the interior of the housing is filled to a level only to the top of the shafts with the space or head above the material being filled with foaming gas pressurized, e.g., to 2.07–2.41·10⁶ N/m² (300–350 psi). This pressure forces the material up the dip tube 56 and to the dispensing nozzle. Since the dip tube 56 extends down to the centerline of the shafts, it is assured that gas in the head space does not inadvertently enter the dip tube which otherwise would interrupt the flow of material and cause sputtering. A sight glass 58 extending through the housing wall 22 can be used to visually observe the material to control the material level. Likewise, the torque sensor 42 can be used to sense and thus control the level of material in the housing.

Alternatively, the housing can be completely filled with material as when gas is injected through lines 16a or 16b. In this case, the delivery pressure of the material to the mixer can be used to force the material/gas solution out of the mixer and to the dispensing nozzle.

The housing 22 may be heated if desired, for example, in a temperature range of 20°C to 320°C (70°F to 600°F) by means of a band heater 60. Ports 62 may be provided along the length of the housing for insertion of thermocouples to measure the temperature of material within the housing.

The rotating action of the intermeshing discs 48 is believed to apply a positive pressure to the viscous polymer which continuously pumps or forces the polymer from one end of the housing from the inlet 52 along the length of the housing 22 to the downstream end of the housing where it is discharged through the dip tube 56. The pumping pressure exerted on the viscous polymer by the intermeshing discs is greatest at the lower nip of the discs. A stator 64 in the bottom of the housing 22 having a cross section closely conforming to the radius of the discs at the lower nip of the discs prevents substantial bypassing of the material through the lower nip of the discs. Rather, on rotation of the disc, the polymer tends to adhere to the surface of the disc and thus is picked up from the bottom of the housing and brought to the upper surface. When gas is injected into a head space above the disc, the polymer brought to the surface is exposed to the gas creating fresh contacting surface for entraining the gas in the polymer. Thus, a "finger" of gas is drawn below the static fluid level following the flow of the fluid and with proper disc geometry mixes and dissolves in the polymer. The disc mixer both breaks up large bubbles of gas in the polymer and also entrains very small gas bubbles at the nip 51. Where gas bubbles are added to the polymer either as the polymer is metered into the disc mixer or through the upstream end of the mixer, rotation of the discs causes stretching of the gas bubbles generating surface area for dissolution to occur. Thus, with a high viscosity, high molecular weight polymer, rotation of the discs maintains laminar flow of the polymer material creating surface by separating the fluid along its flow lines. This generates maximum surface area with a minimum amount of work and thus minimum power consumption in the mixing operation.

Although the Figures show the orientation of the disc mixer to be one where the shafts on which the discs are mounted are substantially horizontally disposed, that particular orientation is not critical. It is of course necessary to have the shafts horizontal when a gas head space is created above the polymer material. However, where the foaming gas is mixed with the polymer either before or at the time of its injection into the disc mixer, the mixer can be on a vertical axis with either the upstream or downstream end at the higher elevation or in any orientation therebetween since the polymer material fills the interior in the housing. Moreover, the number of discs used and their diameter, thickness and spacing can be altered depending on the viscosity of the material being handled and desired throughput rates. Thus, it is believed that with relatively low viscosity materials on the order of 500 to 5,000 mPa·s a large number of relatively small thin discs in a smal volume unit operated at a high shaft rpm would be suitable. With higher viscosity materials on the order of 5000 to 3,000,000 mPa·s, fewer large diameter discs spaced further apart and operated at lower speeds could be used.

Still further, the disc mixer is subject to a number of variations. For example, it is not necessary that both shafts be rotated. Rather, mixing has been successfully carried out by rotating only one of the shafts 24, 26 such that the discs on the rotating shaft intermesh with the fixed, non-rotating discs on the other shaft. This demonstrates that successful mixing can be accomplished by intermeshing discs, one set being on a rotor and the other on a stator. Also, the present invention contemplates a number of shafts (greater than the two shown in the Figures) carrying discs which intermesh with the discs on adjacent shafts. In accordance with the principles stated, some of these shafts may be operated as rotors and some as stators or all as rotors.

In the embodiment of the invention wherein the housing 22 is adapted to be filled completely with polymer, it is contemplated that a second stator be located within the housing 22 having a contour similar to that of stator 64 and opposite thereto. These stators are believed to reduce the presence of eddies and stagnant material areas that otherwise decrease the efficiency of the mixing unit. Thus although desirable in this regard, they are not absolutely necessary for mixing.

The specific disc mixer used in performing the specific examples recited below was formed of forged steel 4140 tubing 33.5 cm (13.19 inches) in length and 11.9 cm (4.685 inches) in diameter. The tubing had an external Watlow electric band tape heater permitting it to be heated in the range of 20°C to 320°C (70°F to 600°F). Two shafts extended through the housing as shown in Fig. 3 of the drawings. Each shaft carried 11 solid steel discs 6.67 cm (2.625 inches) in diameter and 0.64 cm (0.25 inches) in thickness. The discs were spaced on the shafts to form three stages. In the first stage, the discs were 1.27 cm (0.5 inches) apart; in the second stage, they were 1.91 cm (0.75 inches) apart; and in the third stage, they were 2.54 cm (1 inch) apart. The discs were driven by an electric motor manufactured by Hampton Products Company, Inc. having a variable horsepower from 0 to 3. It was typically operated at less than 0.5 horsepower. The rpm's of the shaft could be varied from 0 to 175 rpm but were typically operated at 100 rpm area. The material was delivered to a nozzle for dispensing which varied between 0.16 cm and 0.48 cm (1/16 and 3/16 inch) in internal diameter and 1.91 cm and 3.81 cm (3/4 and 1 1/2 inch) in length depending on the material and pressures involved.

Example I

The apparatus of the drawings having the physical parameters described above was operated for foaming Eastabond A-3. Eastabond A-3 is a low molecular weight branched polyethylene-based hot melt adhesive composition manufactured by Eastman Chemical Company. Its viscosity, as measured by a Brookfield Viscometer, was 2200 mPa·s at 180°C (350°F). The material was supplied to the mixer at a pressure of 4.83 to 5.1·$10^6$ N/m² (700 to 740 psi) at an average flow rate into the mixer of 36 kg (80 pounds) per hour. Nitrogen gas at a temperature of 21°C (70°F and a pressure of 5.48·$10^6$ N/m² (800 psig) was added to the polymer stream upstream of the mixer (line 16a of Fig. 1) so that both polymer and gas entered the mixer through the polymer inlet 52. The mixer was operated at about 160 rpm shaft rotation. The material passed through the mixer and was dispensed through the dip tube to a dispensing nozzle. The temperature of the gas/polymer solution exiting the mixer was 180°C (350°F). The overall flow rate of material from the mixer was on the order of 36 kg (80 pounds) per hour. The resulting product was a continuous, creamy, very homogeneous foam with small bubbles contained therein. The foam ratio by volume (ratio of volume of material occupied after foaming to volume occupied before foaming) was 2.26:1. This example thus illustrates the foaming of a lower viscosity hot melt adhesive at 180°C (350°F) to form a homogeneous adhesive foam.

Example II

The apparatus essentially like that of the drawing and used in Example I was operated for foaming an intermediate molecular weight branch polyethylene based adhesive, Eastabond A-32, again manufactured by Eastman Chemical Company. This material, which is a hot melt adhesive, had a viscosity on the order of 35,000 to 40,000 mPa·s as measured by a Brookfield Viscometer at 180°C (350°F). It was injected into the disc mixer at a temperature of 180°C (350°F) and a pressure of 2.07 to 3.79·$10^6$N/m² (300 to 550 psig). The flow rate into the mixture was between 6.75 and 18 kg (15 and 40 pounds) per hour. Carbon dioxide at 21°C (70°F) and 9.65 to 10.0·$10^6$ N/m² (1400 to 1450 psig) was metered into the polymer stream at a rate of 0.12 to 0.26 kg (0.26 to 0.58 pounds) per hour upstream of the mixer. This was accomplished by inserting a porous steel tube in the polymer material flow line to the mixer. The porous tube communicated with the source of gas under pressure. The polymer material stripped the gas bubbles off the surface of the porous tube as it flowed by.

The material with foaming gas added then entered the mixer and passed therethrough with a flow rate from the mixer of 6.3 to 18 kg (14 to 40 pounds) per hour. The mixer was operated at 180°C (350°F) and the material was dispensed from the top of the mixer to a 0.16 cm (1/16 inch) nozzle. The mixer was operated full so that there was no gas head in the mixer. The shafts were rotated at about 96 rpm. The resulting foam had a foam ratio by volume of between 3:1 and 7:1. The foam was homogeneous although it contained larger bubbles than in Example I. This example demonstrates the continuous production of polymeric foams from higher viscosity hot melt adhesives at good flow rates and good foam ratios.

Example III

An apparatus similar to that illustrated in the drawing and used in the previous examples was also employed in this example. Eastabond A-32 as used in Example II was mixed with Freon 114 as the foaming agent. The Freon was at temperature of 21°C (70°F) and 9.65 to 10.34·$10^6$ N/m² (1400 to 1500 psig). It was passed through a porous steel tube as in the previous example which was contained within the flow tube to the mixer containing the hot melt adhesive such that bubbles were pulled off the surface of the porous tube by the hot melt flowing thereby. The flow rate of the Freon was 0.6 kg (1.3 pounds) per hour or abour 3.3% by weight of polymer. Again the mixer was operated full at about 95 rpm shaft rotation. A view through the sight glass in the middle of the mixer indicated that essentially all of the gas bubbles diffused into the polymer material since there were no visible bubbles. The polymer/gas solution was again dispensed through the top of the mixer to a 0.16 cm (1/16 inch) dispensing nozzle. The material flow rate from the mixer was 6.3 to 18 kg (14 to 40 pounds) per hour. The foam ratio of the material was about 5:1 to 8:1 by volume. Again the resulting product was a continuous homogeneous foam.

## Example IV

An apparatus similar to that illustrated in the drawing and used in the previous examples was also employed in this example to foam a polyisobutylene sealant manufactured by Tremco Company, JS-792. This material had a viscosity of 500,000 to 700,000 mPa·s as measured by a Brookfield Viscometer at a temperature of 190°C (375°F). The material was introduced into the mixer through the material inlet at the upstream end of the mixer at a rate of 4.5 to 13.5 kg (10 to 30 pounds) per hour. Three different gases were used for foaming: $CO_2$, $N_2$ and He. That is, a different gas was used in three separate experiments. Each was supplied into the head space above the material in the mixer. The $CO_2$ and He gas was supplied at a pressure of $1.72 \cdot 10^6$ N/m² (250 psig) and the $N_2$ gas at $3.45 \cdot 10^6$ N/m² (500 psig). The flow rates for $CO_2$, $N_2$ and He gas were on the order of 1%, 0.5% and 1% by weight of polymer, respectively. The polymer/gas solution was dispensed at a temperature of 213°C (415°F) through the bottom of the mixer for $CO_2$ and $N_2$ gas and through the top for He. The foam ratios for $CO_2$, $N_2$ and He gas used were 2.5:1 to 4:1, 2:1 and 1.5:1, respectively. The resulting mixture in each case was an elastic foam which collapsed with time. The half life of the foam (time to be reduced in volume by 50%) was on the order of 15 to 30 minutes.

## Example V

An apparatus similar to that illustrated in the drawing was also employed in this example to demonstrate the foaming of a relatively highly viscous polymer material. Dow Corning 734 Silastic RTV manufactured by Dow Corning Company was foamed in this example. This material is a thermosetting RTV silicone rubber. Its viscosity was greater than 1,000,000 mPa·s. The material was supplied to the mixer at a pressure of $1.72 \cdot 10^6$ N/m² (250 psig) and a flow rate of about 2.25 kg (5 pounds) per hour at a maximum temperature of 10°C (50°F). Nitrogen gas at a temperature of 21°C (70°F) and a pressure of $1.72 \cdot 10^6$ N/m² (250 psig) was introduced into the head space above the polymer in the mixer. The material exited the top of the mixer at a temperature of less than 27°C (80°F). It was dispensed through a 0.16 cm (1/16 inch) nozzle. The flow rate from the mixer was on the order of 2.25 kg (5 pounds) per hour and the foam produced had a foam ratio of 2.2:1. The resulting product was a tough, resilient foam rubber having gas cells up to 0.16 cm (1/16 inch) in diameter. This example demonstrates the efficacy of the present apparatus and method of this invention in forming acceptable foams of relatively high viscosity polymer materials, i.e., those exceeding 1,000,000 mPa·s at acceptable throughputs with minimal and acceptable temperature rise of the polymer material.

Experimental work has shown that polymeric materials can be foamed with relatively low horsepower requirements and minimal and therefore acceptable temperature rise of the material. For example, Eastabond A-3 was foamed at a horsepower requirement of 0.02. Based on this measured energy input and the heat capacity of the material, this translates to a temperature rise of only 0.55°C (1.4°F) at a throughput rate of 27 kg (60 pounds) per hour. A thermoplastic butyl sealant such as Tremco JS-792 required only 0.07 horsepower and would result in a temperature rise at a flow rate of 27 kg (60 pounds) per hour of only 2.83°C (5.1°F). The high viscosity silicone materials such as Dow Corning 732 Silicone RTV was foamed at a horsepower requirement of only 0.12 and would result in a temperature rise of only 4.83°C (8.7°F) at a throughput rate of 27 kg (60 pounds) per hour. It has been calculated by contrast that a paddle driven by a one horsepower motor would raise the temperature of the silicone RTV sealant well in excess of 37.8°C (100°F). Thus, the present invention provides a method and apparatus for efficiently foaming relatively high viscosity polymeric materials with minimal horsepower requirements and in turn minimal and acceptable temperature rise of the material.

The foams produced by this invention have a wide variety of uses. They may be injected and molded, used for adhesive applications, foamed in situ to seal openings, seams and cracks, or foamed in situ as part of a manufacturing process such as forming gaskets and seals in place.

The advantages of the present invention can be additionally appreciated by recognizing that currently silicone RTV rubbers are foamed only by using expensive specialty ingredients and a platinum catalyst. The high cost of the material makes its uses extremely limited. The present invention on the other hand provides highly efficient and low cost foaming of polymeric material for a wide variety of applications extending from hot melt adhesives through the high viscosity thermosetting sealants and caulkings. Moreover, many of these polymeric materials contain fillers which cause wear when pumped through a gear pump. For example, Tremco JS-792 butyl sealant is 35% filled. Similar wear is not a problem with the disc mixing apparatus of this invention.

It will be recognized that a wide variety of multiple shaft and disc configurations may be adopted depending on the polymer material being foamed and on the throughout rates desired. It will also be recognized that there may be a number of variations of a flat disc which also achieve laminar flow of the polymer as opposed to turbulent mixing including a spoked-wheel configuration. However, those variations which nevertheless produce laminar flow are intended to be encompassed by the term "disc" used herein. It will be further recognized that the present invention can foam materials having viscosities from several thousand up to 3,000,000 mPa·s. However, below about 10,000 mPa·s, it is usually more efficient to use a gear pump for foaming. Thus, the present invention finds particular applicability in foaming materials above 10,000 mPa·s and typically above 30,000 mPa·s where throughput rates using a gear pump drop off dramatically.

## Claims

1. Apparatus for mixing gas with a fluid polymer material to form a polymer/gas solution at a pressure above atmospheric pressure, comprising a pair of substantially parallel, oppositely driven shafts (24, 26), a housing (22) surrounding said shafts (24, 26), polymer material inlet means (16, 28, 52) at one end of said housing (22), polymer/gas solution outlet means (56) at the other end of said housing (22), means (54) for introducing a gas into said housing (22) and means (38, 44, 46) for driving said shafts (24, 26) to cause mixing of said gas with said polymer to form said polymer/gas solution upstream of said polymer/gas solution outlet means (56), characterized by the apparatus further comprising a series of spaced discs (48) fixedly mounted on each shaft substantially perpendicularly to the axis thereof, the discs on one shaft (24) intermeshing with the discs on the other shaft (26), said discs serving to divide said housing (22) into a series of compartments along its length.

2. The apparatus of claim 1 wherein the spacing between said discs (48) increases from said polymer material inlet means (52) to said polymer/gas solution outlet means (56).

3. The apparatus of claims 1 wherein said shafts (24, 26) are substantially horizontally disposed, said housing (22) has an interior contour corresponding closely to the contour of a lower arcuate portion of said intermeshing discs (48), and said means for introducing a gas comprises an opening (54) in the wall of said housing (22) above the center-line of said shafts whereby said gas fills a head space above the polymer material contained in said mixer.

4. The apparatus of claim 1 wherein said means for introducing a gas comprises a gas inlet (16) connectable to a source of gas for introducing gas into said polymer material upstream of said polymer inlet means (52).

5. The apparatus of claim 1 wherein said housing (22) includes an interior contour (64) corresponding closely to the contour of at least an arcuate portion of said intermeshing discs (48).

6. A method of forming foam from polymer materials comprising the steps of: introducing polymer material into a chamber (22) in a fluid state, said polymer having a viscosity greater than about 10,000 mPa·s, introducing gas into said chamber (22), pressurizing said chamber (22), mixing said polymer material in said chamber while under pressure substantially solely by causing a laminar flow shearing action in said material to force said gas into solution in said polymer material, and dispensing the material and gas solution at atmospheric pressure to cause said gas to be released from solution and form a polymer foam.

7. The method as claimed in claim 6 wherein said shearing action is caused by moving a substantially flat element (48) having a substantially flat surface through said material in directions parallel to said flat surface.

8. The method as claimed in claim 7 wherein a plurality of said elements (48) are moved through said polymer in directions parallel to said flat surface.

9. The method as claimed in claim 8 wherein two said elements (48) are moved relative to each other and in directions parallel to their flat surfaces.

10. The method as claimed in claim 9 wherein the motion of said elements is provided by a series of flat discs (48) fixed on a pair of rotatable parallel spaced axes (24, 26), said discs on one axis intermeshing with the discs on the other axis.

11. The method as claimed in claim 8 wherein said material flows through said chamber (22) and the direction of flow of said material is substantially perpendicular to the direction of movement of said flat surface through said polymer.

12. The method of claim 6 wherein said gas is introduced into a head space above said polymer material and wherein said material entrains said gas from said head space.

13. The method of claim 6 wherein said gas is introduced into said polymer material as gas bubbles.

14. The method of claim 6 wherein said polymer material is a thermoplastic adhesive and wherein said method includes the step of heating solid thermoplastic adhesive to convert it to a fluid state.

## Patentansprüche

1. Vorrichtung zur Vermischung eines Gases mit einer fluiden Polymersubstanz zur Bildung einer Polymer/Gas-Lösung bei einem Druck, der über dem atmosphärischen Druck liegt, mit zwei im wesentlichen parallelen, gegensätzlich angetriebenen Wellen (24, 26), mit einem die Wellen (24, 26) umgebenden Gehäuse, mit Einlaßmitteln (16, 28, 52) für die Polymersubstanz an einem Ende des Gehäuses (22), mit Auslaßmitteln (56) für die Polymer/Gas-Lösung an dem anderen Ende des Gehäuses (22), mit Mitteln (54) zum Einführen eines Gases in das Gehäuse (22), und mit Mitteln (38, 44, 46) zum Antrieb der Wellen (24, 26) zur Vermischung des Gases mit dem Polymer zur Erzeugung der Polymer/Gas-Lösung stromaufwärts der Auslaßmittel (56) für die Polymer/Gas-Lösung, dadurch gekennzeichnet, daß die Vorrichtung ferner eine Reihe voneinander beabstandeter, fest auf jeder Welle und im wesentlichen senkrecht zu deren Achse befestigte Scheiben (48) aufweist, wobei die Scheiben der einen Welle (24) zwischen die Scheiben der anderen Welle (26) greifen, und wobei die Scheiben der Längsaufteilung des Gehäuses (22) in eine Reihe von Abteilungen dienen.

2. Vorrichtung nach Anspruch 1, in der der Abstand zwischen den Scheiben (48) von den Einlaßmitteln (52) für die Polymersubstanz zu den Auslaßmitteln (56) für die Polymer/Gas-Lösung hin zunimmt.

3. Vorrichtung nach Anspruch 1, in der die Wellen (24, 26) im wesentlichen horizontal angeordnet sind, das Gehäuse (22) ein Innenprofil besitzt, das eng an das Profil eines unteren bogenförmigen Abschnitts der ineinandergreifenden Scheiben (48) angepaßt ist, und in der die Mittel zum Einführen eines Gases eine Öffnung (54) in der Wand des Gehäuses (22) oberhalb der Mittellinie der Wellen aufweist, wodurch das Gas einen oberen Raum über der in dem Mischer enthaltenen Polymersubstanz füllt.

4. Vorrichtung nach Anspruch 1, in der die Mittel zum Einführen eines Gases einen Gaseinlaß (16) aufweist, der an eine Gasquelle anschließbar ist, um stromaufwärts von den Einlaßmitteln für die Polymersubstanz Gas in die Polymersubstanz einzuführen.

5. Vorrichtung nach Anspruch 1, in der das Gehäuse (52) ein Innenprofil (64) beinhaltet, welches eng an das Profil wenigstens eines bogenförmigen Abschnitts der ineinandergreifenden Scheiben (48) angepaßt ist.

6. Verfahren zur Bildung von Schaum aus Polymersubstanzen mit den folgenden Verfahrensschritten: Einführen einer Polymersubstanz in einem fluiden Zustand in eine Kammer (22), wobei das Polymer eine Viskosität größer als etwa 10.000 mPa•s besitzt, Einführen eines Gases in die Kammer (22), Beaufschlagen der Kammer (22) mit Druck, Vermischung der Polymersubstanz in dem Gas während der Druckbeaufschlagung, im wesentlichen allein durch Erzeugen eines Laminarströmungs-Abschervorgangs in der Substanz, und Verteilen der Substanz/Gas-Lösung unter atmosphärischem Druck, um ein Freiwerden des Gases aus der Lösung zu verursachen und Polymerschaum zu bilden.

7. Verfahren nach Anspruch 6, in dem der Abschervorgang durch Bewegung eines im wesentlichen ebenen Elements (48) verursacht wird, welches eine im wesentlichen ebene Oberfläche durch die Substanz hindurch besitzt, in zu der ebenen Oberfläche parallelen Richtungen.

8. Verfahren nach Anspruch 7, in dem eine Vielzahl der Elemente (48) in zu der ebenen Oberfläche parallelen Richtungen durch das Polymer bewegt werden.

9. Verfahren nach Anspruch 8, in dem zwei Elemente (48) relativ zueinander und in zu ihren ebenen Oberflächen parallelen Richtungen bewegt werden.

10. Verfahren nach Anspruch 9, in dem die Bewegung der Elemente durch eine Reihe von ebenen Scheiben (48) erreicht wird, die auf zwei drehbaren und parallel voneinander beabstandeten Wellen (24, 26) befestigt sind, wobei die Scheiben einer Welle zwischen die Scheiben der anderen Welle greifen.

11. Verfahren nach Anspruch 8, in dem die Substanz durch die Kammer (22) fließt und die Fließrichtung der Substanz im wesentlichen senkrecht zu der Bewegungsrichtung der ebenen Oberfläche durch das Polymer verläuft.

12. Verfahren nach Anspruch 6, in dem das Gas in einen oberen Raum oberhalb der Polymersubstanz eingeführt wird und in dem die Substanz das Gas aus dem oberen Raum mitreißt.

13. Verfahren nach Anspruch 6, in dem das Gas in die Polymersubstanz in Form von Gasblasen eingeführt wird.

14. Verfahren nach Anspruch 6, in dem die Polymersubstanz aus einem thermoplastischen Kleber besteht und in dem das Verfahren den Verfahrensschritt der Erwärmung eines festen thermoplastischen Klebers enthält, um ihn in einen fluiden Zustand überzuführen.

## Revendications

1. Appareil pour mélanger un gaz avec un matériau polymère fluide pour former une solution polymère/gaz à une pression supérieure à la pression atmosphérique, comportant deux arbres sensiblement parallèles (24, 26) entraînés en sens inverse, un carter (22) entourant lesdits arbres (24, 26), des moyens d'entrée de matériau polymère (16, 28, 52) à une extrémité dudit carter (22), des moyens de sortie de la solution polymère/gaz (56) à l'autre extrémité dudit carter (22), des moyens (54) pour introduire un gaz dans ledit carter (22) et des moyens (38, 44, 46) pour entraîner lesdits arbres (24, 26) et provoquer le mélange dudit gaz avec ledit polymère en formant ladite solution polymère/gaz en amont desdits moyens de sortie de la solution polymère/gaz (56), caractérisé en ce que l'appareil comporte en outre une série de disques espacés (48) montés fixes sur chaque arbre de façon sensiblement perpendiculaire à leur axe, les disques d'un arbre (24) étant engagés entre les disques de l'autre arbre (26), lesdits disques servant à diviser ledit carter (22) en une série de compartiments suivant sa longueur.

2. Appareil selon la revendication 1, dans lequel l'espacement entre lesdits disques (48) croît depuis lesdits moyens d'entrée de matériau polymère (52) vers lesdits moyens de sortie de solution polymère/gaz (56).

3. Appareil selon la revendication 1, dans lequel lesdits arbres (24, 26) sont disposés de façon sensiblement horizontale, ledit carter (22) ayant un contour intérieur correspondant étroitement au contour d'une partie inférieure incurvée desdits disques engagés entre eux (48), et lesdits moyens pour introduire un gaz comportant un orifice (54) dans la paroi dudit carter (22) au-dessus de l'axe desdits arbres, ce qui fait que ledit gaz remplit un espace de tête au-dessus du matériau polymère contenu dans ledit mélangeur.

4. Appareil selon la revendication 1, dans lequel lesdits moyens pour introduire un gaz comportent une entrée de gaz (16) pouvant être raccordée à une source de gaz pour introduire un gaz dans ledit matériau polymère en amont desdits moyens d'entrée de polymère (52).

5. Appareil selon la revendication 1, dans lequel ledit carter (22) comprend un contour intérieur (64) correspondant étroitement au contour d'au moins une partie incurvée desdits disques engagés entre eux (48).

6. Procédé pour former une mousse à partir de matériaux polymères, comportant les étapes: d'introduction d'un matériau polymère à l'état fluide dans une chambre (22), ledit polymère ayant une viscosité supérieure à 10.000 mPa•s, d'introduction d'un gaz dans ladite chambre (22), de mise sous pression de ladite chambre (22), de mélange dudit matériau polymère dans ledit gaz tandis qu'il est sous pression, essentiellement en provoquant uniquement une action de cisaillement par écoulement laminaire dans ledit matériau pour forcer ledit gaz en solution dans ledit matériau polymère, et de distribution de la solution de matériau et de gaz à la pression atmosphérique pour provoquer le dégagement dudit gaz à partir de la solution et former une mousse de polymère.

7. Procédé selon la revendication 6, dans lequel ladite action de cisaillement est provoquée en déplaçant un élément sensiblement plat (48), présentant une surface sensiblement plane, à travers ledit matériau, dans des directions parallèles à ladite surface plane.

8. Procédé selon la revendication 7, dans lequel une pluralité desdits éléments (48) sont déplacés à travers ledit polymère et dans des directions parallèles à leurs surfaces planes.

9. Procédé selon la revendication 8, dans lequel deux dits éléments (48) sont déplacés l'un par rapport à l'autre et dans des directions parallèles à leurs surfaces planes.

10. Procédé selon la revendication 9, dans lequel le mouvement desdits éléments est obtenu par une série de disques plat (48) fixés sur deux arbres rotatifs parallèles espacés (24, 26), lesdits disques d'un arbre étant engagés entre les disques de l'autre arbre.

11. Procédé selon la revendication 8, dans lequel ledit matériau s'écoule à travers ladite chambre (22) et la direction d'écoulement dudit matériau est sensiblement perpendiculaire à la direction du mouvement de ladite surface plane à travers ledit polymère.

12. Procédé selon la revendication 6, dans lequel ledit gaz est introduit dans un espace de tête au-dessus dudit matériau polymère et dans lequel ledit matériau entraîne ledit gaz à partir dudit espace de tête.

13. Procédé selon la revendication 6, dans lequel ledit gaz est introduit dans ledit matériau polymère sous forme de bulles de gaz.

14. Procédé selon la revendication 6, dans lequel ledit matériau polymère est un adhésif thermoplastique et dans lequel ledit procédé comprend l'étape de chauffage de l'adhésif thermoplastique solide pour le faire passer dans un état fluide.

FIG. 1

FIG. 2

FIG.3

FIG.4

TO NOZZLE

EP 0 220 450 B1